# EUROPEAN PATENT SPECIFICATION

(11) **EP 2 099 343 B1**
(45) Date of publication and mention of the grant of the patent: **01.09.2010**
(21) Application number: 07859525.3
(22) Date of filing: 27.12.2007
(51) Int. Cl.: A47J 36/34, F24C 15/10

(54) **COOKING DEVICE**
KOCHVORRICHTUNG
DISPOSITIF DE CUISSON

(30) Priority: 29.12.2006 TR 200607636 U
(43) Date of publication of application: 16.09.2009
(73) Proprietor: Vestel Beyaz Esya Sanayi Ve Ticaret A.S., 45030 Manisa (TR)
(72) Inventor: TURAN, Halil, 35030 Izmir (TR); PEKMEN, Halil, 35290 Izmir (TR); AKYURT, Zafer, Izmir (TR); GÜVEN, Erdem, Izmir (TR)
(74) Representative: Cayli, Hülya
(86) International application number: PCT/IB2007/055314
(87) International publication number: WO 2008/081394

(56) References cited:
- EP-A- 1 338 851
- WO-A-2008/020341
- JP-A- 9 215 609
- US-A- 5 356 646
- US-A1- 2006 016 798

## Description

### Technical Field

The present invention relates to cooking devices, which prevent the occurrence of cholesterol increase and carcinogenic effect arising from cooking by supplying electrons to food, and thus allows the foods to maintain their vitamin value and taste.

### Prior Art

In prior art, it is known that the carcinogenic effect is reduced of foods by regaining their electrons -which they lose during cooking- by means of an integrated system provided on the cooking vessels.

In the Patent US 5356646, the food within a cooking vessel provided with "+" and"-" poles completes the electrical circuit, thereby gaining the electrons resulting from the potential difference. In said invention, in order for the electrodes placed within said cooking vessel to perform electron supply, it is a requirement that a cooking liquid (oil, water, etc.) is provided within said vessel. Such liquid constituting a requirement for completing the electrical circuit creates a significant restriction for users. Additionally, the users are left to use only certain pots for ensuring the desired antioxidant effect. A grid designed for pots and solid foods as disclosed in this document does not provide a flexible and easy manner of use for the users. Deterioration of food molecules takes place mostly on the lower wall of said cooking vessel, corresponding to the zone with the highest cooking temperature. In this approach, any such deteriorated food molecules satisfy their electron lack back from the food molecules, until they reach the zone of electron supply. This fact reduces the system's efficiency.

In the patent document US6528768, another way of supplying electron is disclosed by means of a holder attachable to cooking vessels being electrically conductive. There, the holder of the vessel functions as the anode, whereas the vessel functions as the cathode. An energy supply is integrated to the vessel's holder in order to create an adequate potential difference between the minus (-) and plus (+) charges. With this approach, dependence occurs to the holder or lid of the vessel for ensuring the antioxidant effect.

In another patent document US 2006/016798 A1, a food treating method and apparatus which comprises a vessel and a handle is described. According to said document, a DC electric circuit is integral with the handle and provides a reducing DC electric current to supply electrons to food in the vessel. Thus, the added electrons inhibit and/or reduce the formation of acrylamides in the food prepared in the food treating apparatus.

As pointed out above, the electron source is provided within the cooking vessel, and the users are bound with such vessels to provide the antioxidant effect during cooking.

In the present invention, however, cooking devices are developed, providing the users with the opportunity of cooking different foods at the same time, and working to prevent oxidation in an independent manner from the physical condition of foods by making use of any type of cooking vessels made from any conductor materials. Thus, the requirement of using only certain cooking vessels to ensure the antioxidant effect is eliminated. Furthermore, the system efficiency is enhanced by providing electron supply to a zone, where cooked foods start deteriorating.

### Objective of Invention

The objective of the present invention is to provide cooking devices, which reduce the formation of carcinogen and other substances increasing the cholesterol level in blood, preserve the vitamin values by reducing the deterioration of vitamins during cooking, and maintain the natural tastes of foods, all such targets achieved by means of reducing the oxidation that occurs in foods during cooking.

Another objective of the present invention is to make use of the antioxidant effect in more than one and distinct cooking operations simultaneously by means of a single cooking device.

A further objective of the present invention is to alert the user on the functioning of the antioxidant function, once the cooking vessel contacts the contact points on the cooker and completes the circuit.

Yet a further objective of the present invention is to separate the system ensuring the antioxidant effect from cooking vessels (without necessitating a special cooking vessel) so as to provide a hygienic cooking opportunity.

Yet another objective of the present invention is to provide an intense electron supply at heating zones where food deterioration occurs at most.

### Description of Drawings

The subject cooker is illustrated in annexed figures briefly described hereunder.
Figure 1 is a schematic view of electron supply to cooking devices.
Figure 2, is a side cross-sectional view of applying the present invention to gas burner cookers by making use of the hob grid.
Figure 3, is a side cross-sectional view of applying the invention in such a way that it is placed to the upper surface of the cooktop of contact mechanism in gas burner cookers, Figure 4, is a front cross-sectional view of a device within the oven.
Figure 4a is a detailed cross-sectional view of such device within the oven.
Figure 5, is a side cross-sectional view of applying the present invention to hot plates.
Figure 6, is a side cross-sectional view of applying the present invention to vitroceramic hobs.
Figure 7 is a perspective view of applying the present invention to vitroceramic hobs by means of a glass-embedded conductor or conductor paint.
Figure 8 is a bottom view of the grid used in gas burner cookers.
Figure 9 is a top view of the upper surface of cooktop in gas burner cookers.
Figure 10, is a side cross-sectional view of applying the present invention by making use of a thermocouple.
Figure 11 is a side view of a gas burner cooker where an electromagnetic transformer is used as the source of electricity.
Figure 12 is a top view of applying the present invention to grid adapters.

The parts in said figures are individually enumerated as following:
Cooker/cooktop (A)
Cooked food (1)
Cooking vessel (2)
Liquid media (3)
Electricity source (4)
Primary transformer (4')
Secondary transformer (4")
Contact mechanism (5, 5')
Hob grid (6, 6')
Gas burner (7)
Cooktop surface (8, 8')
Inner body of oven (9)
Hot plate (11)
Vitroceramic glass (12)
Electrical heater (13)
Conductor coating or electrical conductors (14)
Conductor wire (21, 21')
Grid contact (23, 24)
Cooktop contact (25, 26)
Cooktop (27)
Dielectric component (29')
Thermocouple (30)
Grid adapter (31)

### Description of invention

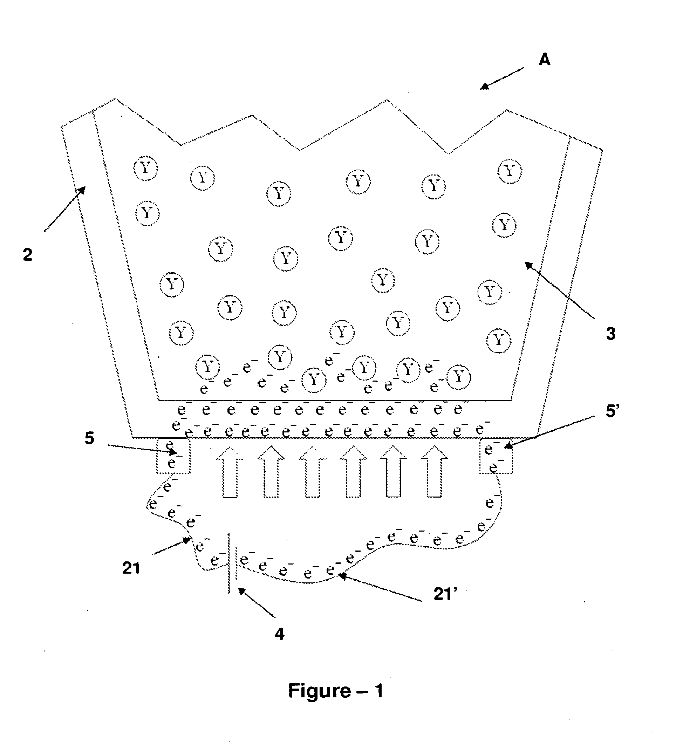

The present invention relates to cookers, which provide electron supply to food during cooking for reducing or eliminating the occurrence of carcinogenic effect and cholesterol increase due to cooking, and which maintain the vitamin values and natural tastes of foods by reducing the deterioration of vitamins during cooking. Such cooker embodiment is shown in different illustrative applications of figures 1 to 12. The present invention, for instance, can be used in many various cooking systems such as gas burner cooktops, hot plates, ovens, vitroceramic hobs, etc. The basic feature of the present invention is that it
comprises a system that reduces or eliminates oxidation. As indicated above, electrons are supplied to foods during cooking to reduce oxidation so that the foods regain the electrons they lose during cooking. In this manner, the cooking-based molecular deterioration of foods subjected to cooking is reduced or avoided.

Figure 1 is a schematic representation of electron supply to cooking devices. Since heat transfer occurs through the base of cooking vessels in cooking devices, the temperature of basal sections of vessels becomes maximized so that food molecule deterioration starts there. In this system, electrons moving from the minus (-) to plus (+) poles pass intensively through the inner and outer surfaces of the basal wall of the vessel, resulting in an electron-rich zone at the lower part of the inner volume of such vessels. As a result, food deterioration is avoided by transferring electrons to food molecules at the lower zone of a vessel, where the risk of deterioration is relatively higher.

Another significant feature of the present invention is provided in that the users can use their current cooking vessels (provided that they are electrically-conductive) for this purpose. In other words, there is no need to a special kind of cooking vessel. Furthermore, separate cooking operations can be performed simultaneously on a single cooker. A cooker (A) with illustrative embodiments given in annexed figures (figures 1 to 12) comprises a heating element used for conducting heat to a cooking vessel (2), a heating surface whereon said cooking vessel (2) is placed, contact mechanisms (5, 5') used for providing electron flow by contacting said vessel (2), and an electricity source (4) for transferring electrons to said vessel (2) by means of these mechanisms (5, 5'). At least one of the electrically-conductive contact tips of contact mechanisms (5, 5') extends outwardly under spring effect, and once a cooking vessel (2) is placed on itself, it fits into its slot. These movable contact tips on said contact mechanisms (5, 5') can provide the required contact to the vessel (2), even if the lower surface of such cooking vessels (2) and/or of said heating surface is not smooth enough.

Examples of heating elements referred to above include gas burner cooktops, hot plates, heating arrangements within oven, vitroceramic hobs, etc. Exemplary embodiments where such heating elements are employed are illustrated in annexed figures and disclosed in detail as following.

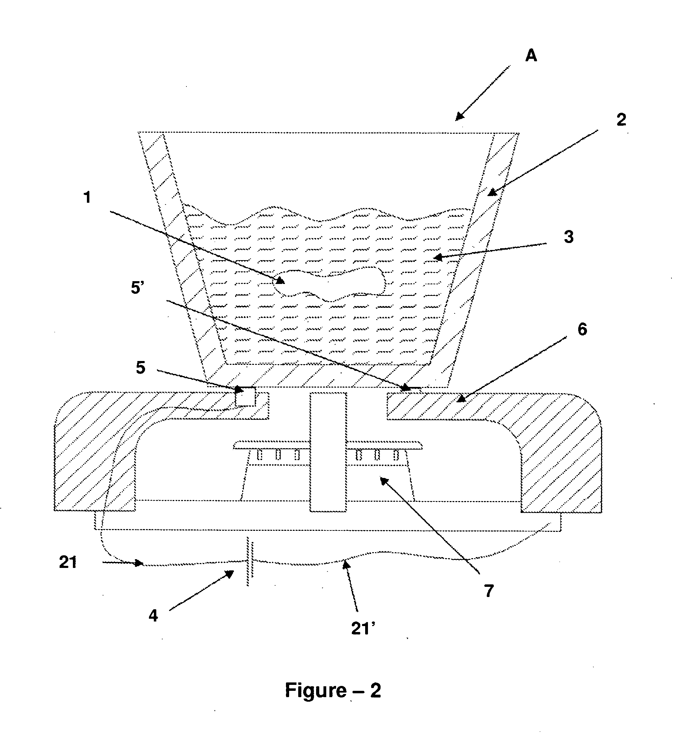

Figure 2, is a side cross-sectional view of applying the present invention to gas burner cooktops by making use of hob grids. This cooker (A) comprises a gas burner (7) as the heating element, hob grid (serving at the same time as the heating surface) (6) where contact mechanisms (5, 5') are placed, electricity source (4) generating the current to pass through the cooking vessel (2), and the anode and cathode contact mechanisms (5, 5') passing the current to the cooking vessel (2). Heat transfer occurs from the gas burner (7) to the cooking vessel (2) during a cooking operation. During this process, the current formed by the source of electricity (4) is delivered to the contact mechanisms (5) by means of conductors (21) or the hob grid (6). And with the hob grid (6) directly contacting the cooking vessel (2), the system is operated. After the current is passed through the cooking vessel (2), it is passed with the support of conductors (21') via the contact mechanism (5') or through the hob grid (6) so that the electron loop is completed.

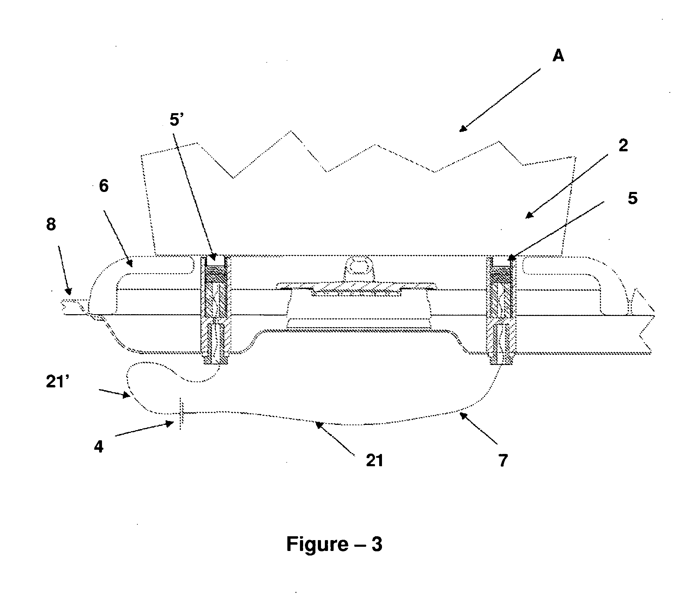

Figure 3, is a side cross-sectional view of applying the contact mechanisms (5, 5') so as to be placed to the upper surface of the cooktop (8) in gas burner cooktops according to the present invention. As different from the cooker illustrated in Figure 1, the contact mechanisms (5, 5') in this cooker (A) are mounted to the cooktop's top surface (8) in place of the hob grid for completing the circuit. Here, once the cooking vessel (2) is placed on the hob grid (6), electrons from the source of electricity (4) are first transferred to the vessel by means of the contact mechanism (5) contacting the bottom of said vessel (2), and then to the liquid containing the food (3) or to the food (1) itself. In an alternative embodiment, one of the contacts (5, 5') may be provided on the hob grid (6), the other on the cooktop's surface (8) or it may be the grid (6) itself.

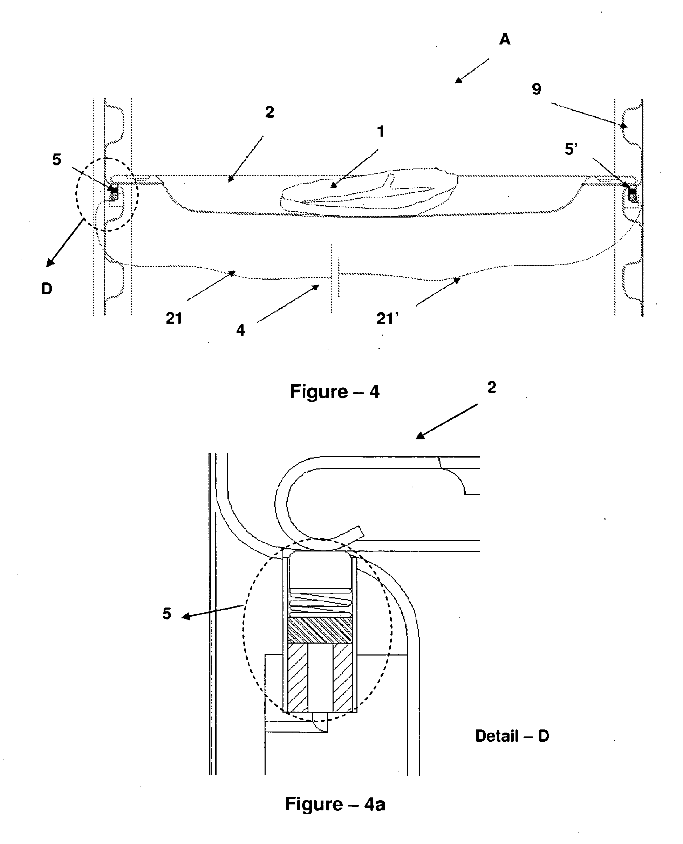

Figure 4 is a front cross-sectional view of a device within oven (a detailed cross-section view of Figure 4 is provided in Figure 4a) with some modifications. Due to the structure of the oven, there is no heating surface where cooking vessel (2) is placed. However, bottom resistances of the oven create a heating region under cooking vessel. Moreover, in this cooker (A), there exists contact mechanisms (5, 5') provided to the inner body (9) of the oven. Electrical current from the source of electricity (4) is passed through the cooking vessel (2) at the contact point where said vessel (2) contacts the inner body (9) by means of contact mechanisms (5, 5') so that electrons are supplied to food subjected to cooking. Such cooking vessels (2) are produced from electrically-conducting materials so as to pass the incoming electrical current to the cooking liquid (3) or to the food (1) subjected to cooking.

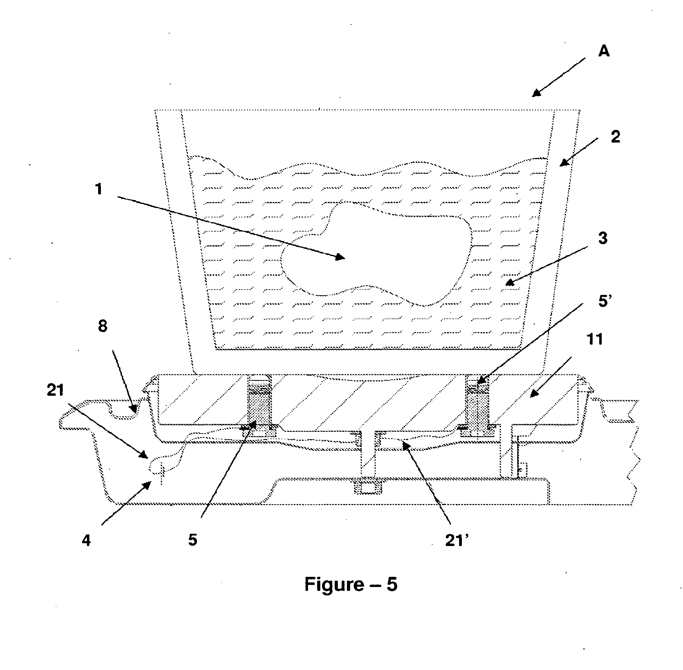

Figure 5, is a side cross-sectional view of applying the present invention to hot plates. In this cooker (A), electrical cast heaters (11) are used as the heating element. Here, the heating surface is the upper surface of said heater (11). The contact mechanisms (5, 5') here are positioned on the heating element (11) and/or on the cooktop's upper surface (8), so that when a cooking vessel (2) is placed on the hot plate (11), the vessel's (2) full positioning is not avoided. As was the case with the cookers (A) referred to above, the current from the source of electricity (4) is passed through the cooking vessel (2) by means of contact mechanisms (5, 5'), thereby supplying electrons to the food subjected to cooking.

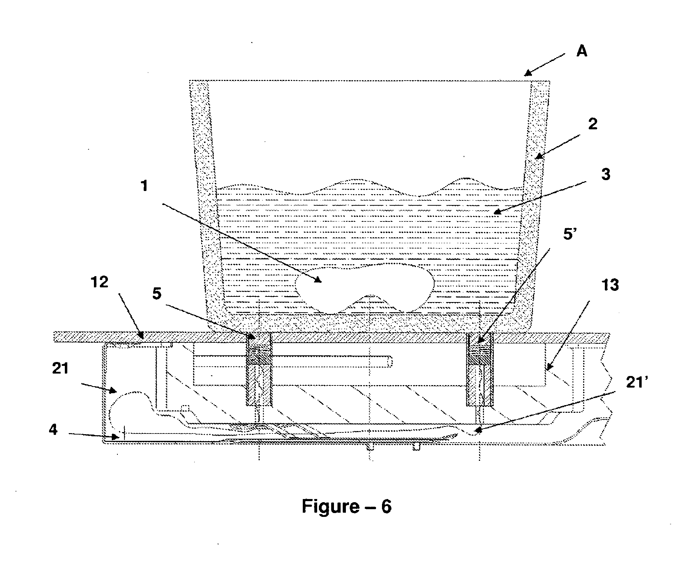

Figure 6, is a side cross-sectional view of applying the present invention to vitroceramic hobs. In this type of cooker (A), an electrical heater (13) suitable for vitroceramic cookers is used as the heating element and a vitroceramic glass (12) is used as the heating surface. The contact mechanisms (5, 5') here are placed to orifices on the vitroceramic glass (12). As was the case with the cookers (A) referred to above, the current from the source of electricity (4) is passed through the cooking vessel (2) by means of contact mechanisms (5, 5'), thereby supplying electrons to the food (1) or to the liquid containing the food (3).

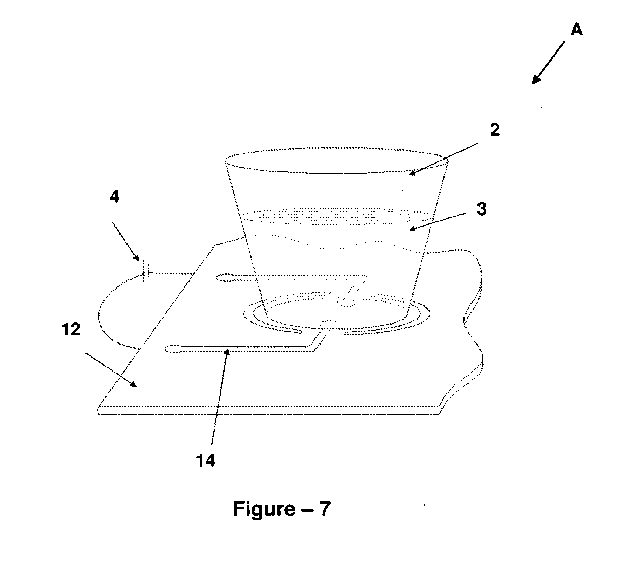

Figure 7 is a perspective view where the present invention is applied to vitroceramic glass (12) in vitroceramic hobs by means of regionally-coated electrical conductors or conductor coating (14). The electrical current here is passed from the cooking vessel (2) to the cooking liquid (3) or to the food (1) by means of the conductor coating on the glass (12) without having to bore the vitroceramic glass (12) or by means of electrical conductors (14) embedded to the glass.

As an alternative embodiment in such vitroceramic hobs, the conductor coating on the glass (12) or the electrical conductors embedded to the glass on the one hand, and at the other hand, a contact mechanism (5, 5') positioned in a hole on the vitroceramic glass (12) can be used for providing electron supply to the food.

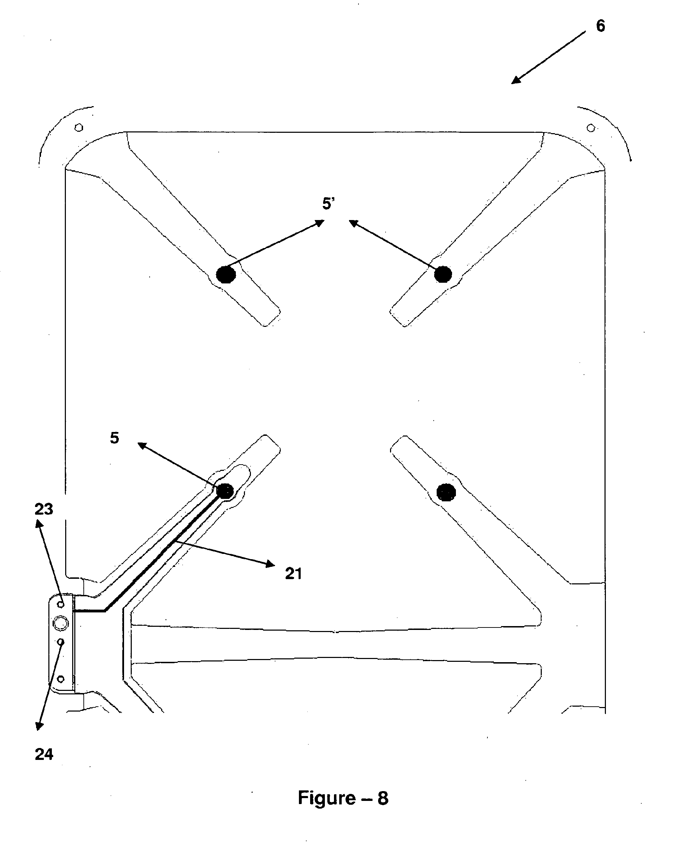

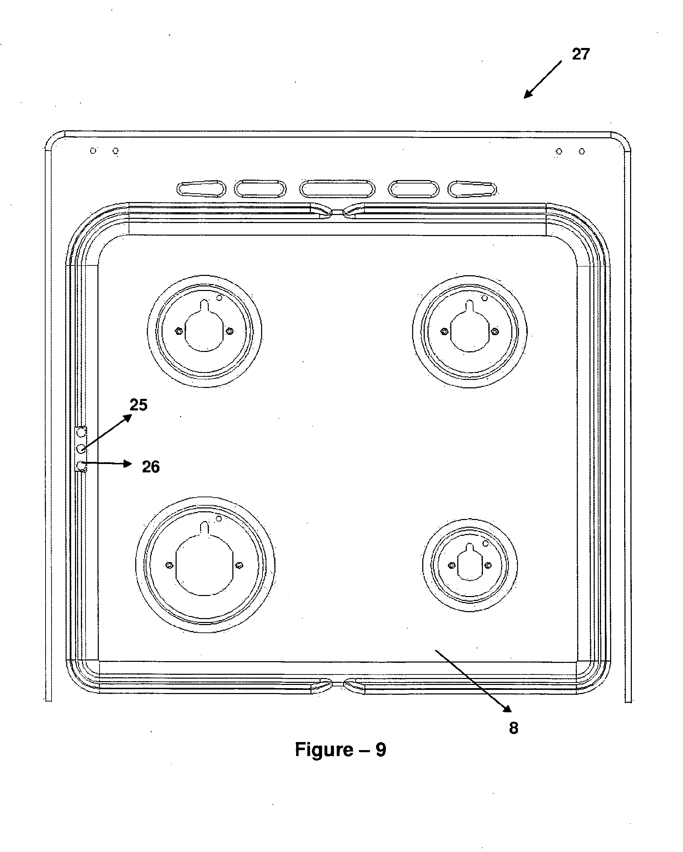

Figure 8 illustrates the hob grid (6) used in gas burner cooktops (it is also illustrated in Figure 2) from below, whereas Figure 9 provides a top view of the cooktop (27) whereon a hob grid (6) is placed. This hob grid (6) according to the gas burner cooktop (A) mentioned above comprises contact mechanisms (5, 5') positioned at points where the cooking vessel is to be positioned, conductor wire (21) used to provide electrical connection with at least one of such mechanisms (5, 5'), a grid contact (23) where one end of said conductor wire (21) is connected, and another grid contact (24) provided aside this contact. When the grid (6) is placed on the upper surface of the cooktop (8), the grid contact (23) contacts the cooktop contact (26) on said surface (8). Likewise, the other grid contact (24) contacts the other cooktop contact (25). Thus, electron supply provided from a source of electricity at the cooktop (27) is delivered to the contact mechanism (5) and vessel by means of the cooktop contact (26), grid contact (23), and the conductor wire (21). The circuit is completed with the other contact mechanism (5'), the grid body (6) in direct electrical contact with this mechanism (5'), the grid contact (24), and the cooktop contact (25). When the cooking vessel (2) is placed on the grid (6), electrical current is passed through the contact mechanisms (5, 5') and the cooking vessel both by means of the grid (6) itself which is made from an electrically-conducting material, and the conducting wires (21), so that this current supplies electron to food during cooking. In this embodiment, the source of electricity is connected to the said cooktop contacts (25, 26).

Figure 8 illustrates one zone of the grid (6). Food is supplied with electrons from the other zones as well by means of the circuit formed from conducting wires (21) and the conductivity of the grid (6) itself. Thus, it becomes possible to conduct more than one and different oxidation-reducing or eliminating cooking operations simultaneously by means of a single device.

In another embodiment of the present invention, thanks to an indicator (a led for instance) connected to the circuit that provides the electron supply of the cooker (A), the information on whether or not the circuit is completed during operation is provided to the user. Thanks to this indicator, the user is made aware of the functioning or nonfunctioning status of the oxidation-reducing or eliminating cooking operation. As an alternative, the user can start or stop the antioxidant cooking operation by means of a turn ON/OFF switch connected to this circuit.

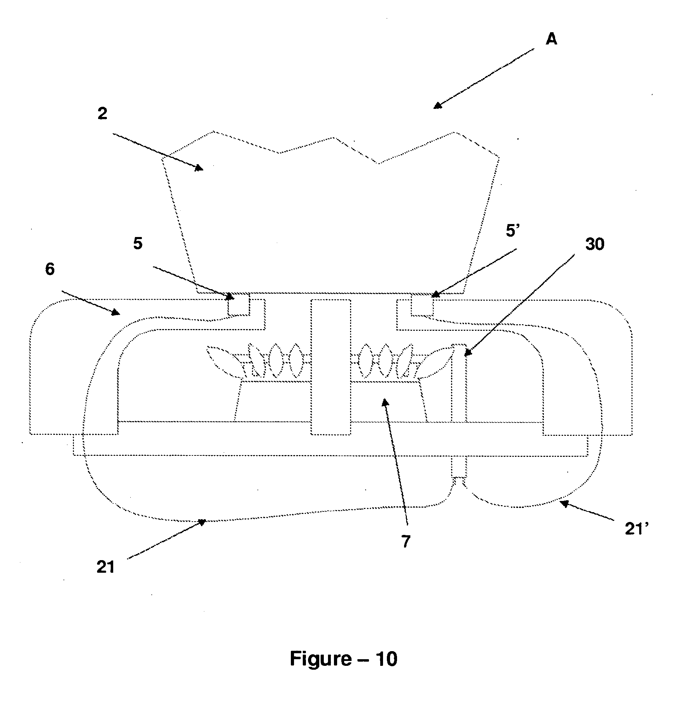

In Figure 10 is given a thermocouple (30), as an example for the source of electricity (4) used in the subject embodiments. Electrons are transmitted to the contact mechanism (5, 5') by means of such thermocouple (30) heated up during cooking.

In a further embodiment of the present invention, a natural magnetic transformer is employed as the source of electricity (4). The electron flow supplied from a transformer, providing electron flow by creating a magnetic field with the natural magnets on itself, is canalized to the said contact mechanisms (5, 5').

Yet in a further embodiment of the present invention, an electromagnetic transformer is used as the source of electricity (4), this transformer reducing the electricity directly supplied to it, thereby generating a flow of electrons. Such flow of electrons is directed to such contact mechanisms (5, 5').

Still in a further embodiment of the present invention, a piezoelectric elements is employed as the source of electricity (4). A flow of electrons is obtained on such piezoelectric element by applying vibration, sound, and motion on itself, and this flow is directed to the said contact mechanisms (5, 5').

Yet in another embodiment of the present invention, photovoltaic cells are employed as the source of electricity (4), The flow of electrons obtained from such cells is directed to such contact mechanisms (5, 5').

Still in another embodiment of the present invention, voltaic batteries providing direct current are used as the source of electricity (4), The flow of electrons obtained from such batteries is directed to such contact mechanisms (5, 5').

In another embodiment of the present invention, a current source fed by the electric supply system is used as the source of electricity (4). The flow of electrons obtained from this source is directed to such contact mechanisms (5, 5').

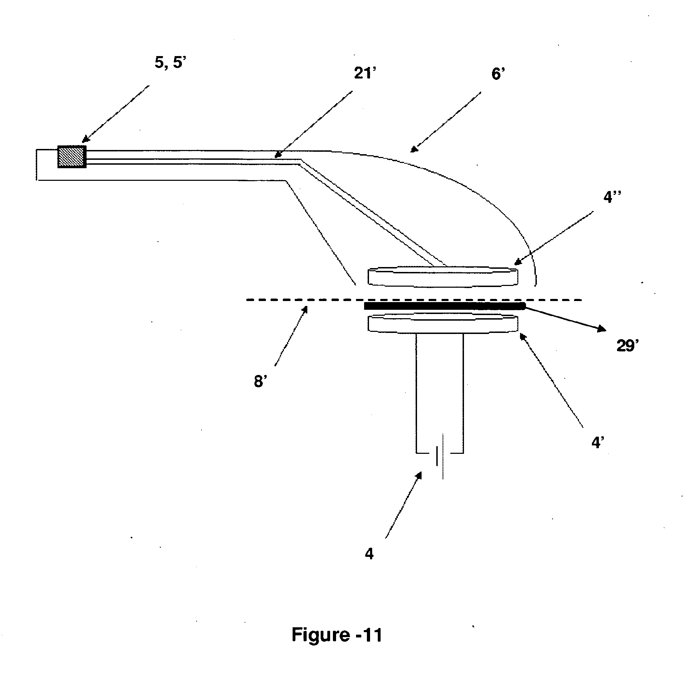

Another embodiment of the present invention is illustrated in Figure 11. The cooker (A) here comprises a hob grid (6'); a secondary transformer (4") embedded under the grid (6') so as to correspond directly to the top of the cooktop's upper surface (8'); a primary transformer (4') positioned right under the upper surface (8') close to said secondary transformer (4") and connected to the electric network system; a conductor wire (21'), and contact mechanisms (5, 5'). The magnetic field created here by the electricity fed to the primary transformer (4') causes a flow of electrons on the coils of the secondary transformer (4"). The current obtained on the secondary transformer (4") is transmitted to the contact mechanisms (5, 5') by means of conductor wires (21') or by means of the grid (6') itself. Thus, the circuit is completed with a cooking vessel contacting said contact mechanisms (5, 5') as mentioned above, so that electrons are supplied to the food (1) or to the juice of food (3) within the vessel. The electron transfer here from the cooktop to the grid (6') is ensured by means of a magnetic field, in place of electrical contact as was the case of examples given above.

The dielectric component (29') shown in Figure 11 can be attached to the secondary transformer (4"), primary transformer (4'), or to the cooktop's upper surface (8'). Alternatively, the same effect may also be ensured with the insulation capacity of air, without using this component.

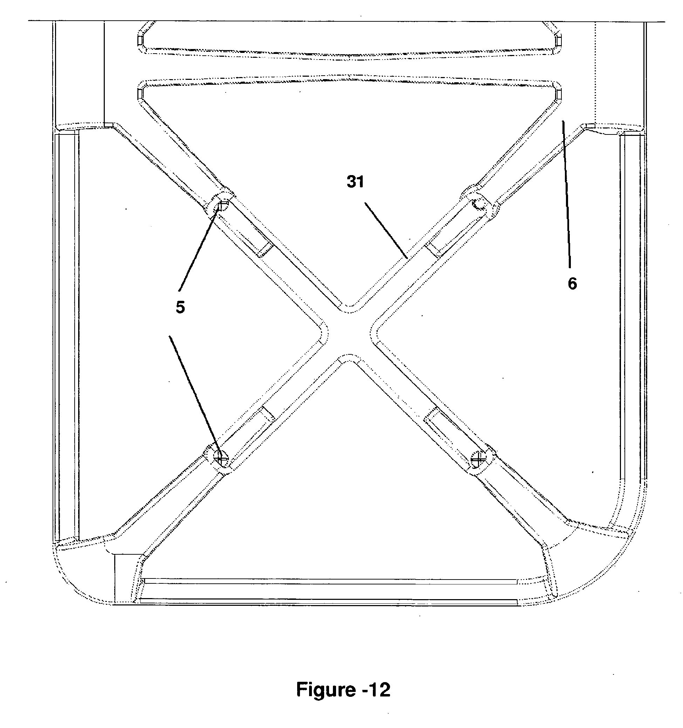

In Figure 12 is given a top view, where the present invention is applied to cooking vessels (such as coffee pots) with smaller basal areas. When the grid adapter (31) illustrated in Figure 12 is settled on the grid (6), the circuit becomes complete and the adapter functions as an electron bridge between the contact mechanisms (5, 5'). Thanks to said grid adapter (31), it becomes possible to use the cooking vessels so small that cannot be settled on contact mechanisms (5, 5') on the grid (6).

Another feature of the present invention is that both solid and liquid foods can be cooked separately or together by means of such antioxidation method. Thanks to transferring any applied electron flow directly to the cooking vessel, solid or liquid materials in contact with the vessel are influenced from such electron flow and become charged with electrons during cooking.

## Claims

1. A cooker (A), supplying electron to a food during cooking, and comprising a heating element used for heat transfer to a electrically conducting cooking vessel (2), a source of electricity (4) used for electron supply; the subject cooker (A) being **characterized in that**;
- a heating surface is provided whereon a basal zone of the said cooking vessel (2) can be placed,
- contact mechanisms (5, 5') is provided whereto said electricity source (4) is connected and whereon basal zone of the said vessel (2) can be placed, so that electron supply is provided to a food within said vessel (2) by the high-temperature basal zone of said vessel (2), where electron loss in foods is maximized during cooking.

2. A cooker (A) according to Claim 1, **characterized in that** at least one of the electrically-conductive contact tips of said contact mechanisms (5, 5') is outwardly extended under spring force to provide the necessary contact of said contact mechanisms (5, 5') with a cooking vessel (2), even if the lower surface of a cooking vessel (2) and/or said heating surface is not smooth enough.

3. A cooker (A) according to Claim 1, **characterized in that** said heating element is a gas burner cooktop which comprises a hob grid (6).

4. A cooker (A) according to Claim 1 **characterized in that** said cooker comprises a cooktop with an upper surface (8), and said heating element is a hot plate (11) which comprises an upper surface.

5. A cooker (A) according to Claim 1, **characterized in that** said heating element is a vitroceramic hob which comprises a vitroceramic glass (12).

6. A cooker (A) according to Claim 3, **characterized in that** said contact mechanisms (5, 5') are placed on the hob grid (6).

7. A cooker (A) according to Claim 3, **characterized in that** the electron loop is completed by delivering the current generated by the source of electricity (4) via conductors (21) or to a contact mechanism (5) through the grid (6) and then to a cooking vessel (2); and after the current is passed though said cooking vessel (2), delivering it from the other contact mechanism (5') by means of the conductors (21') or directly through the grid (6).

8. A cooker (A) according to Claim 3, **characterized in that** said contact mechanisms (5, 5') are placed on the upper surface of the cooktop (8).

9. A cooker (A) according to Claim 3, **characterized in that** one of said contact mechanisms (5, 5') is provided on the grid (6), and the other one on the upper surface of the cooktop (8).

10. A cooker (A) according to Claim 3, **characterized in that** one of said contact mechanisms (5, 5') is provided on the upper surface of cooktop (8), and the other contact mechanism (5, 5') being the grid (6) itself.

11. A cooker (A) according to Claim 4, **characterized in that** said contact mechanisms (5, 5') are positioned on the upper surface of the hot plate (11) and/or on the cooktop's upper surface (8), so that when a cooking vessel (2) is placed on the hot plate (11), the vessel's (2) full positioning on the surface is not avoided.

12. A cooker (A) according to Claim 5, **characterized in that** said contact mechanisms (5, 5') are placed in the holes provided on the vitroceramic glass (12).

13. A cooker (A) according to Claim 5, **characterized in that** a conductor coating on the vitroceramic glass (12) or electrical conductors (14) embedded into the vitroceramic glass (12) are used in place of said contact mechanisms (5, 5').

14. A cooker (A) according to Claim 5, **characterized in that** conductor coating on the vitroceramic glass (12) or electrical conductors (14) embedded into the glass on the one hand, and at the other hand, a contact mechanism (5, 5') positioned in a hole on the vitroceramic glass (12) are employed for providing electron flow to the food in vitroceramic hobs.

15. A cooker (A) according to Claim 7, **characterized by** comprising a conductor wire (21) used for providing electrical contact with at least one of contact mechanisms (5, 5'); a grid contact (23) where one end of said conductor wire (21) is connected; another grid contact (24) positioned adjacent to said contact (23), and having electrical connection through the grid's (6) own body to at least one contact mechanism (5'); a cooktop contact (26) on the upper surface of cooktop (8), where the grid contact (23) contacts to when grid (6) is settled on said upper surface (8); and likewise, another cooktop contact (25) on said upper surface (8), where the other grid contact (24) contacts to.

16. A cooker (A) according to Claim 15, **characterized in that** said cooktop contacts (25, 26) are connected to a source of electricity.

17. A cooker (A) according to Claim 1, **characterized in that** an indicator in connection to the electron-supply circuit is comprised, informing the user if or not the circuit is completed during operation.

18. A cooker (A) according to Claim 1, **characterized in that** a turn ON/OFF switch in connection to the electron-supply circuit is comprised, allowing the user to stop and then restart the antioxidant cooking operation.

19. A cooker (A) according to Claim 1, **characterized in that** said source of electricity (4) is a thermocouple (30).

20. A cooker (A) according to Claim 1, **characterized in that** said source of electricity (4) is an electromagnetic transformer.

21. A cooker (A) according to Claim 1, **characterized in that** said source of electricity (4) is a piezoelectric element.

22. A cooker (A) according to Claim 1, **characterized in that** said source of electricity (4) is photovoltaic cells.

23. A cooker (A) according to Claim 1, **characterized in that** said source of electricity (4) is a direct current battery.

24. A cooker (A) according to Claim 3, **characterized by** comprising a secondary transformer (4") embedded under the grid (6') so as to correspond directly to the top of the cooktop's upper surface (8'); a primary transformer (4') positioned right under the upper surface (8') close to said secondary transformer (4") and connected to the electric network system; a conductor wire (21') connected to said secondary transformer (4") to carry the electrical current generated by primary transformer's (4') magnetic field in the secondary transfer (4") to the cooking vessel (2); and contact mechanisms (5, 5').

25. A cooker (A) according to Claim 1, **characterized by** comprising a grid adapter (31) on which small cooking vessels are placed, and which once settled on the gird (6), completes the circuit and provides an electron bridge between said contact mechanisms (5, 5') for enabling the use of small cooking vessels which are so small that cannot be settled on the contact mechanisms (5, 5') on the grid (6) in antioxidant cooking operations.

## Patentansprüche

1. Kochvorrichtung (A), die einer Nahrung während des Kochens Elektronen zuführt und ein Heizelement, das zur Wärmeübertragung auf ein elektrisch leitfähiges Kochgefäß (2) verwendet wird, und eine Stromquelle (4) umfasst, die zur Elektronenzufuhr verwendet wird: wobei die gegenständliche Kochvorrichtung (A) **dadurch gekennzeichnet ist, dass:**
- eine Heizfläche bereitgestellt wird, auf der ein Grundbereich des Kochgefäßes (2) platziert werden kann,
- Kontakteinrichtungen (5, 5') bereitgestellt werden, woran die Stromquelle (4) angeschlossen wird, und worauf die Grundfläche des Gefäßes (2) so platziert werden kann, dass einem Nahrungsmittel in dem Gefäß (2) durch den Hochtemperaturgrundbereich des Gefäßes(2), wo ein Elektronenverlust in Nahrungsmitteln während des Kochens am höchsten ist, eine Elektronenzufuhr bereitgestellt wird.

2. Kochvorrichtung (A) nach Anspruch 1, **dadurch gekennzeichnet, dass** sich mindestens eine der elektrisch leitenden Kontaktspitzen der Kontakteinrichtungen (5, 5') unter Federkraft nach außen erstreckt, um den notwendigen Kontakt der Kontakteinrichtungen (5, 5') mit einem Kochgefäß (2) selbst dann bereitzustellen, wenn die Unterseite des Kochgefäßes (2) und/oder die Heizfläche nicht glatt genug ist/sind.

3. Kochvorrichtung (A) nach Anspruch 1, **dadurch gekennzeichnet, dass** das Heizelement eine Gaskochfläche ist, die einen Kochfeldrost (6) umfasst.

4. Kochvorrichtung (A) nach Anspruch 1, **dadurch gekennzeichnet, dass** die Kochvorrichtung ein Kochfeld mit einer Oberseite (8) umfasst, und das Heizelement eine Heizplatte (11) ist, die eine Oberseite umfasst.

5. Kochvorrichtung (A) nach Anspruch 1, **dadurch gekennzeichnet, dass** das Heizelement ein Glaskeramikkochfeld ist, das eine Glaskeramikplatte (12) umfasst.

6. Kochvorrichtung (A) nach Anspruch 3, **dadurch gekennzeichnet, dass** die Kontakteinrichtungen (5, 5') am Kochfeldrost (6) angeordnet sind.

7. Kochvorrichtung (A) nach Anspruch 3, **dadurch gekennzeichnet, dass** der elektrische Kreis geschlossen wird, indem der durch die Stromquelle (4) erzeugte Strom über Leiter (21) oder zu einer Kontakteinrichtung (5) durch den Rost (6) und dann zu einem Kochgefäß (2) geleitet wird, und, nachdem der Strom durch das Kochgefäß (2) geflossen ist, er aus der anderen Kontakteinrichtung (5') mittels der Leiter (21') oder direkt durch den Rost (6) geleitet wird.

8. Kochvorrichtung (A) nach Anspruch 3, **dadurch gekennzeichnet, dass** die Kontakteinrichtungen (5, 5') auf der Oberseite des Kochfelds (8) angeordnet sind.

9. Kochvorrichtung (A) nach Anspruch 3, **dadurch gekennzeichnet, dass** eine der Kontakteinrichtungen (5, 5') am Rost (6) und die andere auf der Oberseite des Kochfelds (8) vorgesehen ist.

10. Kochvorrichtung (A) nach Anspruch 3, **dadurch gekennzeichnet, dass** eine der Kontakteinrichtungen (5, 5') an der Oberseite des Kochfelds (8) vorgesehen ist, und die andere Kontakteinrichtung (5, 5') der Rost (6) selbst ist.

11. Kochvorrichtung (A) nach Anspruch 4, **dadurch gekennzeichnet, dass** die Kontakteinrichtungen (5, 5') an der Oberseite der Heizplatte (11) und/oder an der Oberseite des Kochfelds (8) so angeordnet sind, dass, wenn ein Kochgefäß (2) auf die Heizplatte (11) gestellt wird, das flächenbündige Aufstellen des Gefäßes (2) auf der Fläche nicht verhindert wird.

12. Kochvorrichtung (A) nach Anspruch 5, **dadurch gekennzeichnet, dass** die Kontakteinrichtungen (5, 5') in den an der Glaskeramikplatte (12) vorgesehenen Öffnungen angeordnet sind.

13. Kochvorrichtung (A) nach Anspruch 5, **dadurch gekennzeichnet, dass** eine Leiterbeschichtung an der Glaskeramikplatte (12) oder in die Glaskeramikplatte (12) eingebettete elektrische Leiter (14) anstelle der Kontakteinrichtungen (5, 5') verwendet werden.

14. Kochvorrichtung (A) nach Anspruch 5, **dadurch gekennzeichnet, dass** eine Leiterbeschichtung an der Glaskeramikplatte (12) oder in die Glaskeramikplatte (12) eingebettete elektrische Leiter (14) einerseits, und andererseits eine in einer Öffnung an der Glaskeramikplatte (12) angeordnete Kontakteinrichtung (5, 5') verwendet werden, um den in Glaskeramikkochfeldern befindlichen Nahrungsmitteln einen Elektronenstrom bereitzustellen.

15. Kochvorrichtung (A) nach Anspruch 7, **dadurch gekennzeichnet, dass** sie einen Leiterdraht (21), der verwendet wird, um einen elektrischen Kontakt mit mindestens einer der Kontakteinrichtungen (5, 5') bereitzustellen; einen Rostkontakt (23), an dem ein Ende des Leiterdrahts (21) angeschlossen ist; einen weiteren Rostkontakt (24), der angrenzend an den Kontakt (23) angeordnet ist und eine elektrische Verbindung durch den eigenen Körper des Rosts (6) mit mindestens einer Kontakteinrichtung (5') hat; einen Kochfeldkontakt (26) an der Oberseite des Kochfelds (8), mit dem der Rostkontakt (23) einen Kontakt herstellt, wenn der Rost (6) auf die Oberseite (8) gesetzt wird; und gleichermaßen einen weiteren Kochfeldkontakt (25) an der Oberseite (8) umfasst, mit dem der andere Rostkontakt (24) einen Kontakt herstellt.

16. Kochvorrichtung (A) nach Anspruch 15, **dadurch gekennzeichnet, dass** die Kochfeldkontakte (25, 26) an eine Stromquelle angeschlossen sind.

17. Kochvorrichtung (A) nach Anspruch 1, **dadurch gekennzeichnet, dass** ein mit dem Elektronenzufuhrkreis in Verbindung stehender Anzeiger vorhanden ist, der den Benutzer während des Betriebs informiert, ob der Kreis geschlossen ist oder nicht.

18. Kochvorrichtung (A) nach Anspruch 1, **dadurch gekennzeichnet, dass** ein mit dem Elektronenzufuhrkreis in Verbindung stehender EIN/AUS-Schalter vorhanden ist, der es dem Benutzer ermöglicht, den antioxidativen Kochbetrieb aus- und dann wieder einzuschalten.

19. Kochvorrichtung (A) nach Anspruch 1, **dadurch gekennzeichnet, dass** die Stromquelle (4) ein Thermoelement (30) ist.

20. Kochvorrichtung (A) nach Anspruch 1, **dadurch gekennzeichnet, dass** die Stromquelle (4) ein elektromagnetischer Transformator ist.

21. Kochvorrichtung (A) nach Anspruch 1, **dadurch gekennzeichnet, dass** die Stromquelle (4) ein piezoelektrisches Element ist.

22. Kochvorrichtung (A) nach Anspruch 1, **dadurch gekennzeichnet, dass** es sich bei der Stromquelle (4) um Fotovoltaikzellen handelt.

23. Kochvorrichtung (A) nach Anspruch 1, **dadurch gekennzeichnet, dass** die Stromquelle (4) eine Gleichstrombatterie ist.

24. Kochvorrichtung (A) nach Anspruch 3, **dadurch gekennzeichnet, dass** sie einen sekundären Transformator (4"), der unter dem Rost (6') eingebettet ist, um direkt mit der Oberfläche der Oberseite des Kochfelds (8') zu korrespondieren; einen primären Transformator (4'), der genau unter der Oberseite (8') nahe dem sekundären Transformator (4") positioniert und an das elektrische Stromnetz angeschlossen ist; einen Leiterdraht (21'), der an den sekundären Transformator (4") angeschlossen ist, um den elektrischen Strom, der durch das Magnetfeld des primären Transformators (4') im sekundären Transformator (4") erzeugt wird, zum Kochgefäß (2) zu leiten: und Kontakteinrichtungen (5, 5') umfasst.

25. Kochvorrichtung (A) nach Anspruch 1, **dadurch gekennzeichnet, dass** sie einen Rostadapter (31) umfasst, auf den kleine Kochgefäße gestellt werden, und der, sobald er auf dem Rost (6) angeordnet wird, den Kreis schießt und eine Elektronenbrücke zwischen den Kontakteinrichtungen (5, 5') herstellt, um den Gebrauch kleiner Kochgefäße im antioxidativen Kochbetrieb zu ermöglichen, die so klein sind, dass sie nicht auf die Kontakteinrichtungen (5, 5') am Rost (6) gestellt werden können.

## Revendications

1. Dispositif de cuisson (A) fournissant des électrons à un aliment durant la cuisson et comprenant un élément chauffant utilisé pour le transfert de chaleur à un récipient de cuisson électro-conducteur (2), une source d'électricité (4) utilisée pour la fourniture d'électrons ; ledit dispositif de cuisson (A) étant **caractérisé en ce que :**
- une surface chauffante est fournie, sur laquelle une zone de base dudit récipient de cuisson (2) peut être placée,
- des mécanismes de contact (5, 5') sont fournis, auxquels ladite source d'électricité (4) est connectée et sur lesquels la zone de base dudit récipient de cuisson (2) peut être placée, de sorte que la fourniture d'électrons est délivrée à un aliment à l'intérieur dudit récipient (2) par la zone de base à haute température dudit récipient (2), où la perte d'électrons dans des aliments est maximisée durant la cuisson.

2. Dispositif de cuisson (A) selon la revendication 1, **caractérisé en ce qu'**au moins une des pointes de contact électro-conductrices desdits mécanismes de contacts (5, 5') est allongée vers l'extérieur sous une force élastique pour fournir le contact nécessaire desdits mécanismes de contact (5, 5') avec un récipient de cuisson (2), même si la surface inférieure d'un récipient de cuisson (2) et/ou ladite surface chauffante ne sont pas suffisamment lisses.

3. Dispositif de cuisson (A) selon la revendication 1, **caractérisé en ce que** ledit élément chauffant est une table de cuisson à brûleur à gaz qui comprend une grille de plan de cuisson (6).

4. Dispositif de cuisson (A) selon la revendication 1, **caractérisé en ce que** ledit dispositif de cuisson comprend une table de cuisson avec une surface supérieure (8) et ledit élément chauffant est une plaque chaude (11) qui comprend une surface supérieure.

5. Dispositif de cuisson (A) selon la revendication 1, **caractérisé en ce que** ledit élément chauffant est un plan de cuisson en vitrocéramique qui comprend un verre en vitrocéramique (12).

6. Dispositif de cuisson (A) selon la revendication 3, **caractérisé en ce que** lesdits mécanismes de contact (5, 5') sont placés sur la grille de plan de cuisson (6).

7. Dispositif de cuisson (A) selon la revendication 3, **caractérisé en ce que** la boucle d'électrons est complétée par la fourniture du courant généré par la source d'électricité (4) via des conducteurs (21) ou à un mécanisme de contact (5) à travers la grille (6) et ensuite à un récipient de cuisson (2) : et le courant est fait passer ensuite à travers ledit récipient de cuisson (2), en le délivrant de l'autre mécanisme de contact (5') au moyen des conducteurs (21') ou directement à travers la grille (6).

8. Dispositif de cuisson (A) selon la revendication 3, **caractérisé en ce que** lesdits mécanismes de contact (5, 5') sont placés sur la surface supérieure de la table de cuisson (8).

9. Dispositif de cuisson (A) selon la revendication 3, **caractérisé en ce qu'**un desdits mécanismes de contact (5, 5') est fourni sur la grille (6), et l'autre sur la surface supérieure de la table de cuisson (8).

10. Dispositif de cuisson (A) selon la revendication 3, **caractérisé en ce qu'**un desdits mécanismes de contact (5, 5') est fourni sur la surface supérieure de la table de cuisson (8) et l'autre mécanisme de contact (5, 5') étant la grille (6) elle-même.

11. Dispositif de cuisson (A) selon la revendication 4, **caractérisé en ce que** lesdits mécanismes de contact (5, 5') sont positionnés sur la surface supérieure de la plaque chaude (11) et/ou sur la surface supérieure de la table de cuisson (8), de sorte que, quand un récipient de cuisson (2) est placé sur la plaque chaude (11), le positionnement total du récipient (2) sur la surface ne soit pas empêché.

12. Dispositif de cuisson (A) selon la revendication 5, **caractérisé en ce que** lesdits mécanismes de contact (5, 5') sont placés dans des trous prévus sur le verre en vitrocéramique (12).

13. Dispositif de cuisson (A) selon la revendication 5, **caractérisé en ce qu'**un revêtement conducteur sur le verre en vitrocéramique (12) ou des conducteurs électriques (14) noyés dans le verre en vitrocéramique (12) sont utilisés à la place desdits mécanismes de contact (5, 5').

14. Dispositif de cuisson (A) selon la revendication 5, **caractérisé en ce qu'**un revêtement conducteur sur le verre en vitrocéramique (12) ou des conducteurs électriques (14) noyés dans le verre d'une part et, d'autre part, un mécanisme de contact (5, 5') positionné dans un trou sur le verre en vitrocéramique (12) sont utilisés pour fournir un flux d'électrons à l'aliment dans des plans de cuisson en vitrocéramique.

15. Dispositif de cuisson (A) selon la revendication 7, **caractérisé en ce qu'**il comprend un fil conducteur (21) utilisé pour fournir un contact électrique avec au moins un des mécanismes de contact (5, 5') ; un contact de grille (23) auquel une extrémité dudit fil conducteur (21) est connectée ; un autre contact de grille (24) positionné adjacent audit contact (23) et ayant une connexion électrique à travers son propre corps de la grille (6) à au moins un mécanisme de contact (5') ; un contact de table de cuisson (26) sur la surface supérieure de table de cuisson (8), avec lequel le contact de grille (23) est en contact quand la grille (6) est disposée sur ladite surface supérieure (8) ; et, de manière analogue, un autre contact de table de cuisson (25) sur ladite surface supérieure (8), avec lequel l'autre contact de grille (24) est en contact.

16. Dispositif de cuisson (A) selon la revendication 15, **caractérisé en ce que** lesdits contacts de table de cuisson (25, 26) sont connectés à une source d'électricité.

17. Dispositif de cuisson (A) selon la revendication 1, **caractérisé en ce qu'**il comprend un indicateur dans la connexion au circuit de fourniture d'électrons, qui informe l'utilisateur du fait que le circuit est ou non complété durant le fonctionnement.

18. Dispositif de cuisson (A) selon la revendication 1, **caractérisé en ce qu'**il comprend un interrupteur marche/arrêt en connexion avec le circuit de fourniture d'électrons, permettant à l'utilisateur d'arrêter et ensuite redémarrer l'opération de cuisson d'antioxydants.

19. Dispositif de cuisson (A) selon la revendication 1, **caractérisé en ce que** ladite source d'électricité (4) est un thermocouple (30).

20. Dispositif de cuisson (A) selon la revendication 1, **caractérisé en ce que** ladite source d'électricité (4) est un transformateur électromagnétique.

21. Dispositif de cuisson (A) selon la revendication 1, **caractérisé en ce que** ladite source d'électricité (4) est un élément piézoélectrique.

22. Dispositif de cuisson (A) selon la revendication 1, **caractérisé en ce que** ladite source d'électricité (4) est des cellules photovoltaïques.

23. Dispositif de cuisson (A) selon la revendication 1, **caractérisé en ce que** ladite source d'électricité (4) est une batterie de courant continu.

24. Dispositif de cuisson (A) selon la revendication 3, **caractérisé en ce qu'**il comprend un transformateur secondaire (4") intégré sous la grille (6') de manière à correspondre directement au-dessus de la surface supérieure (8') de la table de cuisson ; un transformateur primaire (4') positionné juste au-dessous de la surface supérieure (8') près dudit transformateur secondaire (4") et connecté au système de réseau électrique: un fil conducteur (21') connecté audit transformateur secondaire (4") pour porter le courant électrique généré par le champ magnétique du transformateur primaire (4') dans le transformateur secondaire (4") au récipient de cuisson (2) ; et des mécanismes de contact (5, 5').

25. Dispositif de cuisson (A) selon la revendication 1, **caractérisé en ce qu'**il comprend un adaptateur de grille (31) sur lequel de petits récipients de cuisson sont placés et qui, une fois disposé sur la grille (6), complète le circuit et fournit un pont d'électrons entre lesdits mécanismes de contact (5, 5') pour permettre l'utilisation de petits récipients de cuisson qui sont si petits qu'ils ne peuvent pas être disposés sur les mécanismes de contact (5, 5') sur la grille (6) dans des opérations de cuisson d'antioxydants.
